# EUROPÄISCHE PATENTSCHRIFT

(11) **EP 2 270 343 B1**
(45) Veröffentlichungstag und Bekanntmachung des Hinweises auf die Patenterteilung: **13.04.2016**
(21) Anmeldenummer: 10005975.7
(22) Anmeldetag: 10.06.2010
(51) Int. Cl.: F16B 13/12, E04B 1/76

(54) **Dübel**
Dowel
Cheville

(30) Priorität: 29.06.2009 DE 202009008975 U
(43) Veröffentlichungstag der Anmeldung: 05.01.2011
(73) Patentinhaber: BTS BauTechnischeSysteme GmbH & Co. KG, 45731 Waltrop (DE)
(72) Erfinder: Sawatzki, Günter, 48249 Dülmen (DE)
(74) Vertreter: Meinke, Jochen

(56) Entgegenhaltungen:
- EP-A1- 2 218 922
- DE-U1- 29 604 534
- FR-A- 1 346 754
- FR-A3- 2 456 869
- GB-A- 406 083
- US-A- 1 248 005

## Beschreibung

Die Erfindung betrifft einen Dübel, der insbesondere dazu geeignet und bestimmt ist, an Gebäudewänden mit außenseitiger Wärmedämmung, sogenannten Wärmedämmverbundsystemen, leichtere Gegenstände, wie Bleche, Tafeln oder dgl., zu befestigen.

Das Problem bei solchen Befestigungen ist der Abstand zwischen dem zu befestigenden Teil und dem festen Untergrund, der sich von der Außenoberfläche gesehen, an welcher der zu befestigende Gegenstand anliegt, im Inneren hinter der Wärmedämmung befindet. Ein Beispiel für eine solche Befestigung ist etwa ein Hausnummernschild auf einer Wand mit einem Wärmedämmsystem, das beispielsweise 150 mm dick ist.

Bisher kommen zur Befestigung in der Regel sogenannte Durchsteckmontagen in Form von Blendrahmen, Dübeln oder einfachen Einschlagdübeln zum Einsatz. Blendrahmendübel verfügen zwar über die nötige Länge, haben aber einen Durchmesser von mindestens 10 mm. Die gängigen Schienen und Tafeln weisen jedoch kleinere Durchgangslöcher auf, so dass solche Blendrahmendübel häufig nicht verwendet werden können. Einschlagdübel weisen zwar kleinere Durchmesser auf, sind dann in der Regel aber zu kurz. Außerdem werden Einschlagdübel nicht durch Spreizschrauben dosiert angezogen, sondern einfach mit einem Werkzeug, beispielsweise einem Hammer eingeschlagen. Dünne blechförmige Teile, wie Hausnummernschilder, können dabei leicht beschädigt werden.

Einschlagdübel, die eine schlitzförmige Längsnut aufweisen, welche beim Einschlagen zusammengedrückt wird, sind z.B. aus EP 0 828 084 B1 und DE 296 04 534 U1 bekannt.

Zur Befestigung leichterer Gegenstände sind auch sogenannte Schneckendübel bekannt, z.B. aus DE 203 19 340 U1. Ein solcher Schneckendübel wird nur durch den auf die Wärmedämmung außenseitig aufgebrachten Außenputz in die Wärmedämmung eingedreht und erreicht nicht das dahinter bzw. im Inneren befindliche Mauerwerk. Für die Festigkeit der Befestigung ist ausschließlich die dünne Putzschicht maßgeblich, so dass nur sehr leichte Teile mit einem solchen Schneckendübel befestigt werden können.

Ein weiterer, gattungsbildender Dübel ist aus der GB 406,083 A bekannt

Für die Befestigung von Wandanschlussschienen wird zusätzlich eine Abdichtung der Befestigungsstelle benötigt. Dies wird in der Regel mit einer speziellen Unterlegscheibe mit einer Dichtung, z.B. einer Neoprendichtung, in Verbindung mit der Spreizschraube erreicht.

Bei der Verwendung von Dübeln, die bis in das Mauerwerk reichen und dort verankert werden, besteht zusätzlich das Problem, dass heutzutage häufig Hochlochziegel (Gitterziegel) verwendet werden, in denen übliche Dübel schlecht verankert werden können und außerdem leicht dazu neigen, beim Einschrauben der Spreizschraube durchzudrehen.

Aufgabe der Erfindung ist es, einen Dübel zu schaffen, welcher bei einfacher und kostengünstiger Herstellbarkeit und möglichst einfacher Handhabbarkeit einen sicheren Halt von zu befestigenden Gegenständen an Wänden mit Wärmedämmung gewährleistet, und zwar möglichst unabhängig von der Beschaffenheit des Wandmaterials, wobei insbesondere auch eine sichere Verankerung in Hochlochziegeln gewährleistet sein soll.

Diese Aufgabe wird gelöst durch einen Dübel mit den Merkmalen des Anspruchs 1.

Ein solcher Dübel besteht somit aus drei Schaftbereichen, wobei der erste ein Untermaß aufweisende Schaftbereich die Spreizzone bildet, mit welcher der Dübel von Hand in die Bohrung des Mauerwerkes eingeführt wird. Der zweite Schaftbereich bildet eine Verdrehsicherung. Der Außendurchmesser des zweiten Schaftbereiches ist größer als der des ersten Schaftbereiches und größer als der Innendurchmesser der Bohrung, so dass sich aufgrund des auch im zweiten Bereich vorhandenen Längsschlitzes der Dübel bis zu einem gewissen Maße leicht mit der Hand und mit leichtem Druck bis in das Bohrloch einführen lässt, bis er dort verklemmt und sich nicht mehr verdrehen kann, wenn anschließend die Spreizschraube eingedreht wird. Dieser zweite Schaftbereich und der dritte Schaftbereich, der aufgrund seines Außendurchmessers nicht in den Bereich der Bohrung gelangen kann, befinden sich ganz oder teilweise im Bereich der Wärmedämmung, also außerhalb des eigentlichen Mauerwerkes oder Betons. Wird nach Einsetzen bzw. Eindrücken des Dübels die Spreizschraube eingedreht, spreizt sich der Dübel sowohl im ersten Schaftbereich als auch im zweiten Schaftbereich aufgrund des Längsschlitzes, wobei bei Hochlochziegeln als Mauerwerksmaterial die beste Verankerung im eingeführten Teil des zweiten Schaftbereiches erreicht wird, da in der äußeren Scherbe eines Hochlochziegels die günstigste Bohrlochgeometrie vorliegt. Der erste Schaftbereich, der insgesamt eine Spreizzone ausbildet, gewährleistet, dass bei Hochlochziegeln mehrere Stege getroffen werden, wodurch eine sichere Verankerung auch im Inneren des Hochlochziegels erreicht wird. Auch bei anderen Mauermaterialien, wie z.B. Beton, ist eine einfache Handhabbarkeit und sichere Verankerung gewährleistet, da der erste Schaftbereich ein Untermaß gegenüber der Bohrung aufweist und erst durch die eingedrehte Spreizschraube gespreizt wird.

In besonders vorteilhafter Ausgestaltung ist vorgesehen, dass die sich gegenüberliegenden Randflächen des Längsschlitzes im Wesentlichen parallel zueinander angeordnet sind. Der Übergang des Längsschlitzes zum Bohrungsrand erfolgt dadurch nicht rechtwinklig, sondern abgeschrägt, was dazu beiträgt, dass der Dübel mehr Spreizdruck erhält.

Dabei ist ganz besonders bevorzugt vorgesehen, dass die Längsbohrung wenigstens im ersten Schaftbereich ausgehend von den Randflächen des Längsschlitzes jeweils einen geradlinigen Umfangsrandabschnitt aufweist, wobei beide geradlinigen Umfangsrandabschnitte durch einen halbkreisförmigen Umfangsrandabschnitt miteinander verbunden sind. Von der Stirnseite her gesehen ist die Längsbohrung somit nicht rund, sondern ihre Kontur weist einen Halbkreis auf, dessen Enden schräg auf die Schlitzbreite zulaufen. Dadurch erhält der Dübel mehr Spreizdruck und die Spreizschraube kann nicht aus dem Schlitz laufen, sondern wird sozusagen in den Halbkreis gedrückt.

Des Weiteren ist vorteilhaft vorgesehen, dass der zweite und der dritte Schaftbereich einen übereinstimmenden Außendurchmesser aufweisen.

In weiterer besonders vorteilhafter Ausgestaltung ist vorgesehen, dass die Längsbohrung sich im Übergangsbereich zwischen dem zweiten und dem dritten Schaftbereich von einem ersten Innendurchmesser zu einem zweiten Innendurchmesser erweitert, welcher in etwa dem Außendurchmesser der Spreizschraube entspricht. Durch diese Ausgestaltung wird die Spreizschraube im dritten Schaftbereich gehalten, verankert und geführt. Dabei dient der Übergangsbereich der Längsbohrung als Verankerung. Bei der Vormontage kann durch eine Drehbewegung die Schraube ab Werk verankert werden, d.h. werksseitig kann der Dübel direkt mit verankerter Schraube ausgeliefert werden, natürlich ist auch eine getrennte Auslieferung bzw. Bereitstellung möglich.

Der Dübel kann grundsätzlich aus unterschiedlichen Materialien bestehen. In den meisten Anwendungen ist vorgesehen, dass dieser aus Kunststoff oder insbesondere aus einem verstärkten Kunststoff, z.B. einem glasfaserverstärkten Kunststoff, besteht.

Alternativ kann der Dübel auch aus Aluminium oder Zinkdruckguss gefertigt sein.

Der Dübel wird, wie vorerwähnt, bevorzugt vorgesteckt montiert mit einer Spreizschraube bereitgestellt. Die Gesamtlänge des Dübels kann unterschiedlich sein, d.h. er kann in unterschiedlichen Längen bereitgehalten werden, z.B. zwischen 130 mm bis 360 mm. Der Dübel ist so konstruiert, dass längere Dübel auch bei dünnen Dämmstoffdicken eingesetzt werden können. Der Handwerker bohrt üblicherweise das Bohrungsloch immer 10 mm länger als die gesamte Dübellänge. Möglich ist dies nur bis zu dem Punkt, wo die Dicke der Wand überschritten wird, d.h. der Dübel an der Rückseite wieder austritt. Der Handwerker kann den gleichen Dübel universell für verschiedene Dämmstoffdicken einsetzen und auch Unebenheiten ausgleichen.

Die Erfindung ist nachstehend anhand der Zeichnung beispielhaft näher erläutert. Diese zeigt in
- Fig. 1: eine Seitenansicht auf einen erfindungsgemäßen Dübel,
- Fig. 2: eine Ansicht von rechts auf Fig. 1 und in
- Fig. 3: eine Ansicht von rechts auf Fig. 1 in einer anderen bevorzugten Ausführungsform.

Ein erfindungsgemäßer Dübel ist in der Zeichnung allgemein mit 1 bezeichnet. Dieser einstückig ausgebildete Dübel besteht z.B. aus einem glasfaserverstärkten Kunststoff, er kann aber auch nur aus Kunststoff oder auch aus Aluminium oder Zink oder einem anderen geeigneten Material bestehen.

Der Dübel 1 weist einen hülsenförmigen Schaft auf, welcher in drei aneinander angrenzende Schaftbereiche unterteilt ist, nämlich einen ersten Schaftbereich 2, einen zweiten Schaftbereich 3 und einen dritten Schaftbereich 4. Der erste Schaftbereich 2 weist vorzugsweise am vorderen, in eine nicht dargestellte Bohrung einzuführenden Ende eine Abschrägung 2a auf, der Außendurchmesser des ersten Schaftbereiches 2 ist so bemessen, dass er kleiner ist als der Innendurchmesser der nicht dargestellten Bohrung in einem Mauerwerk oder dgl., d.h. der erste Schaftbereich 2 weist ein Untermaß gegenüber der Bohrung auf, in welche er eingeführt werden soll. Der zweite und der dritte Schaftbereich 3 und 4 wei-sen beim Ausführungsbeispiel den gleichen Außendurchmesser auf, dieser ist so dimensioniert, dass ein Übermaß gegenüber dem Bohrungsinnendurchmesser besteht. Im Bereich der Durchmessererweiterung zwischen dem ersten Schaftbereich 2 und dem zweiten Schaftbereich 3 ist vorzugsweise ein konischer Übergangsbereich 3a vorgesehen.

Der gesamte hülsenförmige Schaft ist mit einer durchgehenden Längsbohrung versehen, die beim Ausführungsbeispiel aus zwei Bereichen mit unterschiedlichem Durchmesser besteht. Im ersten Schaftbereich 2 und im zweiten Schaftbereich 3 weist die Längsbohrung 5a einen Innendurchmesser auf, der kleiner ist als der Außendurchmesser der nicht dargestellten einzudrehenden Spreizschraube. Diese Längsbohrung 5a erweitert sich zwischen dem zweiten Schaftbereich 3 und dem dritten Schaftbereich 4 in eine Längsbohrung 5b mit einem Innendurchmesser, der in etwa dem Außendurchmesser der Spreizschraube entspricht. Der vorzugsweise abgeschrägte Übergangsbereich zwischen den Längsbohrungen 5a und 5b ist mit 5c bezeichnet.

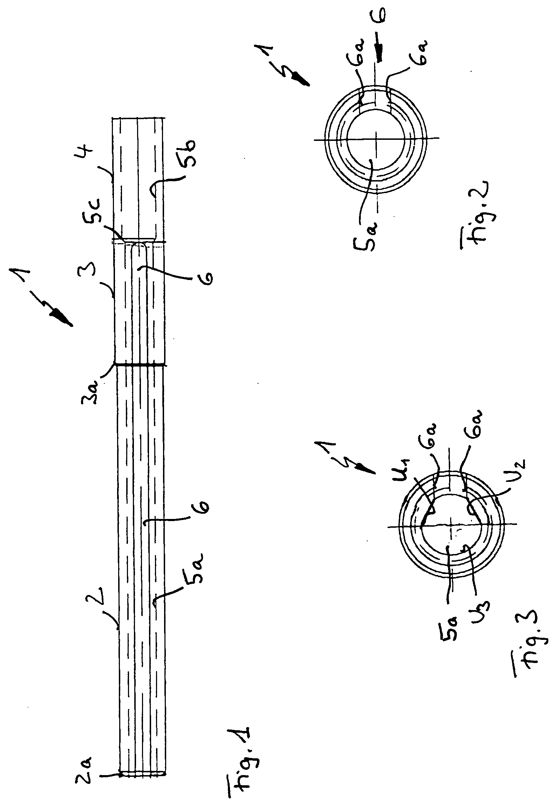

Der erste Schaftbereich 2 und der zweite Schaftbereich 3 weisen in ihrer Mantelfläche einen eine Dübelspreizung ermöglichenden Längsschlitz 6 auf, und zwar über der vollständigen Länge des ersten Schaftbereiches 2 und im Wesentlichen über der ganzen Länge des zweiten Schaftbereiches 3. Dieser Längsschlitz 6 ist, wie am besten aus Fig. 2 hervorgeht, bevorzugt so gestaltet, dass die Randflächen 6a des Längsschlitzes 6 im Wesentlichen parallel zueinander angeordnet sind, derart, dass der Längsbohrungsrand nicht rechtwinklig, sondern schräg auf die Schlitzbreite zuläuft. Hierdurch erhält der Dübel 1 beim Eindrehen der Spreizschraube mehr Spreizdruck.

In Fig. 3 ist eine besonders bevorzugte leicht abgewandelte Ausführungsform des Dübels 1 dargestellt, wobei dieselben Bezugszeichen wie in dem vorangehenden Figuren verwandt sind.

Der Unterschied der Ausführungsform nach Fig. 3 zu derjenigen nach Fig. 2 besteht darin, dass die Längsbohrung 5a zumindest im ersten Schaftbereich 2 ausgehend von den Randflächen 6a des Längsschlitzes 6 jeweils einen geradlinigen Umfangsrandabschnitt U₁, U₂ aufweist, wobei beide Umfangsrandabschnitte U₁, U₂ durch einen halbkreisförmigen Umfangsrandabschnitt U₃ miteinander verbunden sind. Die Kontur der Längsbohrung 5a ist somit nicht rund, sondern sie besteht aus einem Halbkreis, dessen Enden (Umfangsrandabschnitte U₁, U₂) schräg auf die Schlitzbreite zulaufen. Durch diese Ausgestaltung erhält der Dübel 1 noch mehr Spreizdruck und die Spreizschraube läuft nicht aus dem Schlitz 6, sondern wird in den Halbkreis gedrückt.

Typische Abmessungen für einen erfindungsgemäßen Dübel 1, der zur Befestigung von leichteren Gegenständen an einer mit einer Wärmedämmung außenseitig versehenen Gebäudewand dient, sind:
Dübelgesamtlänge: 80 mm, Länge des zweiten und des dritten Schaftbereiches: jeweils 15 mm, Außendurchmesser des zweiten und dritten Schaftbereiches: 6,5 mm, Außendurchmesser des ersten Schaftbereiches 2: 6 mm, Innendurchmesser der Längsbohrung 5a: 3,7 mm, Innendurchmesser der Längsbohrung 5b: 4,5 mm und Breite des Schlitzes 6: 2 mm.

Ein Dübel 1 mit solchen Abmessungen ist z.B. für Wandsysteme geeignet, bei denen der außenseitige Wanddämmstoff eine Dicke von etwa 15 mm aufweist.

Ein solcher Dübel 1 kann werkseitig mit oder ohne Spreizschraube geliefert werden. Wenn er mit einer Spreizschraube geliefert wird, wird diese soweit in die Längsbohrung 5b des Dübels 1 eingeschraubt, dass sie im Übergangsbereich 5c zwischen der Längsbohrung 5a und der Längsbohrung 5b verankert wird.

Zur Montage wird nach Einbringen der Bohrung durch die Außendämmung hindurch in das dahinter liegende Mauerwerk oder dgl. der Dübel 1 von Hand in die Bohrung hineingedrückt, bis der Dübel mit dem zweiten Schaftbereich 3 klemmend am Bohrlochrand anliegt. Dabei wird der Dübel 1 in diesem Bereich aufgrund seines Übermaßes gegenüber dem Bohrungsdurchmesser im Bereich des Längsschlitzes 6 klemmend zusammengedrückt, wodurch eine Verdrehsicherung gewährleistet ist, wenn nachfolgend die Spreizschraube eingedreht wird. Die Spreizschraube wird beim Eindrehen im Bereich des als Führungszone dienenden dritten Schaftbereiches 4 geführt. Im Bereich des zweiten Schaftbereiches 3, der die Verdrehsicherung bereitstellt, erfolgt eine erste Spreizung, insbesondere bei Hochlochziegeln als Mauerwerksmaterial ist in diesem Bereich die Spreizwirkung am größten, da dort an der äußeren Scherbe die günstigste Bohrlochgeometrie vorliegt. Im gesamten ersten Schaftbereich 2 erfolgt eine Spreizung, wodurch aufgrund der Gesamtlänge des ersten Schaftbereiches 2 z.B. bei Hochlochziegeln gewährleistet ist, dass der Dübel in diesem Bereich an mehreren Stegen des Hochlochziegels anliegt und dort sicher verankert ist.

Natürlich ist die Erfindung nicht auf das dargestellte Ausführungsbeispiel beschränkt. Weitere Ausgestaltungen sind möglich, ohne den Grundgedanken zu verlassen. So ist ein solcher Dübel selbstverständlich nicht nur zur Verankerung im Mauerwerk, sondern auch im Beton geeignet. Der Dübel kann in unterschiedlichen geometrischen Abmessungen bereit gehalten werden, um für unterschiedliche geometrische Abmessungen von Wandsystemen geeignet zu sein.

## Patentansprüche

1. Dübel mit einem mit einer durchgehenden Längsbohrung (5a,5b) zur Aufnahme einer Spreizschraube versehenen hülsenförmigen Schaft, welcher einen in eine Bohrung mit Untermaß einführbaren ersten Schaftbereich (2) sowie hintereinander angrenzend daran einen zweiten (3) und einen dritten (4) Schaftbereich aufweist, wobei der zweite und dritte Schaftbereich (3,4) gegenüber der Bohrung ein Übermaß aufweisen, und wobei der erste Schaftbereich (2) vollständig und der zweite Schaftbereich (3) wenigstens bereichsweise in ihrer Mantelfläche in Längsrichtung geschlitzt sind,
**dadurch gekennzeichnet,**
**dass** der erste Schaftbereich (2) und der zweite Schaftbereich (3) einen einzigen eine Dübelspreizung ermöglichenden Längsschlitz (6) aufweisen.

2. Dübel nach Anspruch 1,
**dadurch gekennzeichnet,**
**dass** die sich gegenüberliegenden Randflächen (6a) des Längsschlitzes (6) im Wesentlichen parallel zueinander angeordnet sind.

3. Dübel nach Anspruch 2,
**dadurch gekennzeichnet,**
**dass** die Längsbohrung (5a) wenigstens im ersten Schaftbereich (2) ausgehend von den Randflächen (6a) des Längsschlitzes (6) jeweils einen geradlinigen Umfangsrandabschnitt (U₁, U₂) aufweist, wobei die beiden geradlinigen Umfangsrandabschnitte (U₁, U₂) durch einen halbkreisförmigen Umfangsrandabschnitt (U₃) miteinander verbunden sind, wobei die beiden Umfangsrandabschnitte (U₁, U₂) schräg auf die Randflächen (6a) zulaufen.

4. Dübel nach Anspruch 1 oder 2,
**dadurch gekennzeichnet,**
**dass** der zweite und der dritte Schaftbereich (3,4) einen übereinstimmenden Außendurchmesser aufweisen.

5. Dübel nach Anspruch 1, 2 oder 3,
**dadurch gekennzeichnet,**
**dass** die Längsbohrung (5a,5b) sich im Übergangsbereich zwischen dem zweiten und dem dritten Schaftbereich (3,4) von einem ersten Innendurchmesser zu einem zweiten Innendurchmesser erweitert, welcher in etwa dem Außendurchmesser der Spreizschraube entspricht.

6. Dübel nach einem oder mehreren der Ansprüche 1 bis 4,
**dadurch gekennzeichnet,**
**dass** dieser aus Kunststoff oder einem verstärkten Kunststoff, insbesondere einem glasfaserverstärkten Kunststoff, besteht.

7. Dübel nach einem oder mehreren der Ansprüche 1 bis 4,
**dadurch gekennzeichnet,**
**dass** dieser aus Aluminium oder Zink besteht.

## Claims

1. Wall plug with a continuous longitudinal boring (5a, 5b) provided with a sleeve-like shaft for receiving an expanding screw, said shaft having a first shaft section (2), for introducing into an undersize boring, as well as successively adjoining it a second (3) and a third (4) shaft section, wherein the second and the third shaft section (3, 4) are oversize compared with the boring, and wherein the lateral surface of the first shaft section (2) is completely, and that of the second shaft section (3) at least in parts longitudinally slit,
**characterised in that** the first shaft section (2) and the second shaft section (3) have a single longitudinal slit (6) that allow explanation of the wall plug.

2. Wall plug according to claim 1
**characterised in that**
the opposite edge surfaces (6a) of the longitudinal slit (6) are essentially arranged in parallel to each other.

3. Wall plug according to claim 2
**characterised in that**
the longitudinal boring (5a) at least in the first shaft section (2) starting from the edge surface (6a) of the longitudinal slit (6) has a straight circumferential edge section (U₁, U₂), wherein the two straight circumferential edge sections (U₁, U₂) are connected to each other by a semicircular circumferential edge section (U₃), wherein the two circumferential edge sections (U₁, U₂) extent obliquely to the edge surface (6a).

4. Wall plug according to claim 1 or 2
**characterised in that**
the second and the third shaft section (3, 4) have a corresponding external diameter.

5. Wall plug according to claim 1, 2 or 3
**characterised in that**
the longitudinal boring (5a, 5b) in the transition area between the second and the third shaft section (3, 4) increases from a first internal diameter to a second internal diameter which approximately corresponds with the external diameter of the expanding screw.

6. Wall plug according to one or more of claims 1 to 4
**characterised in that**
it is made of plastic or of a reinforced plastic, more particularly a glass fibre-reinforced plastic.

7. Wall plug according to one or more of claims 1 to 4
**characterised in that**
it is made of aluminium or zinc.

## Revendications

1. Cheville avec une tige en forme de manchon qui est munie d'un trou long traversant (5a, 5b) pour recevoir une vis d'expansion et qui comporte une première partie de tige (2) pouvant être introduite dans un trou avec une cote minorée ainsi que, adjacentes à celle-ci et l'une derrière l'autre, une deuxième partie de tige (3) et une troisième partie de tige (4), la deuxième et la troisième partie de tige (3, 4) ayant une cote majorée par rapport au trou et la première partie de tige (2) ayant une surface enveloppante entièrement fendue dans le sens de la longueur et la deuxième partie de tige (3) ayant une surface enveloppante fendue au moins par endroits dans le sens de la longueur,
**caractérisée en ce que** la première partie de tige (2) et la deuxième partie de tige (3) comportent une seule fente longitudinale (6) permettant une expansion de cheville.

2. Cheville selon la revendication 1, **caractérisée en ce que** les surfaces de bord (6a) de la fente longitudinale (6) qui se font face sont agencées de façon à être sensiblement parallèles l'une à l'autre.

3. Cheville selon la revendication 2, **caractérisée en ce que** le trou longitudinal (5a) comporte au moins dans la première partie de tige (2), à partir des surfaces de bord (6a) de la fente longitudinale (6), à chaque fois un tronçon de bord périphérique rectiligne (U₁, U₂), les deux tronçons de bord périphérique rectilignes (U₁, U₂) étant reliés l'un à l'autre par l'intermédiaire d'un tronçon de bord périphérique semi-circulaire (U₃), les deux tronçons de bord périphérique (U₁, U₂) se dirigeant obliquement vers les surfaces de bord (6a).

4. Cheville selon la revendication 1 ou 2, **caractérisée en ce que** la deuxième et la troisième partie de tige (3, 4) ont un diamètre extérieur identique.

5. Cheville selon la revendication 1, 2 ou 3, **caractérisée en ce que** le trou longitudinal (5a, 5b) s'élargit dans la partie de transition entre la deuxième et la troisième partie de tige (3, 4) d'un premier diamètre intérieur à un deuxième diamètre intérieur qui correspond à peu près au diamètre extérieur de la vis d'expansion.

6. Cheville selon l'une ou plusieurs des revendications 1 à 4, **caractérisée en ce que** celle-ci est en plastique ou en plastique renforcé, notamment en plastique renforcé par des fibres de verre.

7. Cheville selon l'une ou plusieurs des revendications 1 à 4, **caractérisée en ce que** celle-ci est en aluminium ou en zinc.
